# EUROPÄISCHE PATENTSCHRIFT

(11) **EP 3 350 428 B1**
(45) Veröffentlichungstag und Bekanntmachung des Hinweises auf die Patenterteilung: **10.11.2021**
(21) Anmeldenummer: 16753629.1
(22) Anmeldetag: 10.08.2016
(51) Int. Cl.: F02M 21/02, F01N 3/20

(54) **EINSPRITZVORRICHTUNG ZUR ZUMESSUNG EINES FLUIDS UND KRAFTFAHRZEUG MIT EINER DERARTIGEN EINSPRITZVORRICHTUNG**
INJECTION DEVICE FOR METERING A FLUID AND MOTOR VEHICLE HAVING SUCH AN INJECTION DEVICE
DISPOSITIF D'INJECTION SERVANT À DOSER UN FLUIDE ET VÉHICULE À MOTEUR ÉQUIPÉ D'UN TEL DISPOSITIF D'INJECTION

(30) Priorität: 15.09.2015 DE 102015217673
(43) Veröffentlichungstag der Anmeldung: 25.07.2018
(73) Patentinhaber: Vitesco Technologies GmbH, 30165 Hannover (DE)
(72) Erfinder: JOVOVIC, Dejan, 93055 Regensburg (DE); LYUBAR, Anatoliy, 93195 Wolfsegg (DE)
(86) Internationale Anmeldenummer: PCT/EP2016/069022
(87) Internationale Veröffentlichungsnummer: WO 2017/045845

(56) Entgegenhaltungen:
- DE-A1- 10 058 015
- DE-A1-102007 026 892
- DE-A1-102010 045 509
- DE-A1-102012 021 664

## Beschreibung

Die vorliegende Offenbarung bezieht sich auf eine Einspritzvorrichtung zur Zumessung eines Fluids. Insbesondere bezieht sie sich auf eine Einspritzvorrichtung zur Zumessung einer Harnstofflösung in einem Abgasnachbehandlungssystem eines Kraftfahrzeuges. Sie bezieht sich weiter auf ein Kraftfahrzeug mit einer derartigen Einspritzvorrichtung.

Eine Einspritzvorrichtung zur Zumessung eines flüssigen oder gasförmigen Mediums, insbesondere einer Harnstofflösung, ist beispielsweise aus der DE 2008 041 544 A1 bekannt. Bei derartigen Einspritzvorrichtungen besteht das Problem, dass das Fluid einfrieren und durch seine damit verbundene Volumenausdehnung die Einspritzvorrichtung zerstören kann. Beispielsweise gefriert Harnstofflösung bei einer Temperatur von -7°C.

Aus der DE 100 58 015 A1 ist eine Einspritzvorrichtung für Harnstoff bekannt, die mindestens ein Ausgleichsvolumen aufweist, das elastisch verformbar ist.

Bisher wurde auch beispielsweise durch ein Leerspritzen der Einspritzvorrichtung beim Abstellen des Motors versucht, die Harnstofflösung weitgehend aus der Einspritzvorrichtung zu entfernen, um eine Schädigung der Einspritzvorrichtung durch eine Volumenausdehnung beim Einfrieren zu verhindern. Ein vollständiges Leerspritzen der Einspritzvorrichtung ist jedoch nicht in allen Fällen möglich und auch grundsätzlich nicht unbedingt erwünscht.

Es ist eine Aufgabe der vorliegenden Erfindung, eine Einspritzvorrichtung zur Zumessung eines Fluids anzugeben, bei der die Gefahr einer Zerstörung durch einfrierendes Fluid vermindert ist.
Diese Aufgabe wird gelöst durch den Gegenstand des Patentanspruchs 1. Vorteilhafte Ausgestaltungen sind Gegenstand der Unteransprüche.

Gemäß einem ersten Aspekt der Erfindung wird eine Einspritzvorrichtung zur Zumessung eines Fluids angegeben. Gemäß einem weiteren Aspekt wird ein Kraftfahrzeug mit der beschriebenen Einspritzvorrichtung angegeben.

Die Einspritzvorrichtung weist ein Ventil mit einer Ventilnadel und einem Ventilsitz sowie einen die Ventilnadel umgebenden Düsenschaft auf, der ein Volumen des Fluids aufnimmt. Ferner weist die Einspritzvorrichtung eine sich auf der dem Ventil abgewandten Seite des Düsenschafts an diesen anschließende und mit diesem in Fließverbindung stehende Einlasskammer auf. Die Einspritzvorrichtung weist zumindest ein mit einem Gas gefülltes, komprimierbares Volumenausgleichselement auf, das innerhalb der Einspritzvorrichtung in Kontakt mit dem Fluid steht. Der Ventilschaft ist vorzugsweise von einem Ventilkörper der Einspritzvorrichtung und/oder von dem zumindest einen Volumenausgleichselement gebildet. Die Einspritzvorrichtung ist bei einer Ausgestaltung ein Fluid-Einspritzventil.

Das Volumenausgleichselement weist einen Wandbereich aus einem martensitausgehärteten Stahl auf und ist entweder als Inlay ausgebildet und im Innern der Einspritzvorrichtung zentral in der Einlasskammer derart angeordnet, dass es im Wesentlichen vollständig von dem Fluid umgeben ist, und/oder die Ventilnadel einen festen Grundkörper aus martensitausgehärtetem Stahl und einen darum angeordneten und mit dem Grundköper verbundenen komprimierbaren Körper aufweist, so dass das Volumenausgleichselement gebildet ist.

Dabei wird hier und im Folgenden unter einem mit dem Fluid in Kontakt stehenden Volumenausgleichselement ein Volumenausgleichselement verstanden, auf das durch das Fluid Kräfte ausgeübt werden können. Insbesondere ist das Volumenausgleichselement derart ausgebildet und angeordnet, dass im Falle eines Einfrierens des Fluids aufgrund der Volumenzunahme Kräfte auf das Volumenausgleichselement ausgeübt werden. Da das Volumenausgleichselement komprimierbar ist, kann es eine Volumenausdehnung des Fluids kompensieren. Die Kompensation erfolgt insbesondere durch eine Komprimierung des Gases, mit dem das Volumenausgleichselement gefüllt ist. Insbesondere ist das Volumenausgleichselement derart ausgelegt, dass sich sein Volumen beim Erstarren einer den Ventilschaft füllenden Harnstofflösung um einen Wert verringert, der 3,5 % oder mehr, vorzugsweise um 5 % oder mehr, insbesondere zwischen einschließlich 5 % und einschließlich 9 % des Volumens des Ventilschafts entspricht. Unter dem Volumen des Ventilschafts wird dabei dasjenige Fluid-Volumen verstanden, das der Ventilschaft im Betrieb der Einspritzvorrichtung zur Einspritzung des Fluids aufnimmt.

Auf diese Weise ist die Gefahr einer Beschädigung der Einspritzvorrichtung besonders gering. Insbesondere ist das Volumenausgleichselement auf diese Weise dazu ausgebildet, die Volumenzunahme von Harnstofflösung beim Erstarren auszugleichen. Diese beträgt beispielsweise ca. 7 %.

Das zumindest eine Volumenausgleichselement weist einen Wandbereich aus einem martensitausgehärteten Stahl auf. Der Wandbereich kann dabei die Gasfüllung ganz oder teilweise umschließen. Die Verwendung eines martensitausgehärteten Stahls für das Volumenausgleichselement hat den Vorteil, dass bei diesem Material der Übergang zwischen einem elastischen und einem plastischen Verhalten bei sehr hohen Kräften liegt, so dass das Material eine hohe Festigkeit bei einer gleichzeitig hohen Zähigkeit aufweist.

Martensitausgehärtete Stähle werden auch als "Maraging-Stähle" (von englisch "martensite" und "aging" für "martensitaushärtbar") bezeichnet. Sie weisen üblicherweise einen sehr geringen Kohlenstoffanteil auf und sind mit einem hohen Anteil Nickel legiert und können weitere Legierungselemente wie Kobalt, Molybdän, Aluminium, Kupfer, Niob und/oder Titan aufweisen, die die Ausbildung der Martensitphase im Eisen bei einer geeigneten Wärmebehandlung unterstützen. Herkömmliche Maraging-Stähle haben zwar einen verhältnismäßig hohen Nickelanteil von typischerweise mehr als 8 Gew.%, teilweise mehr als 12 Gew.%. Daneben gibt es jedoch neuere Hochleistungsstähle, die ebenfalls zu den Maraging-Stählen zählen, mit einem Nickelgehalt von nur 2-3 Gew.% und einem Mangangehalt von 9-12 Gew.%. Auch derartige Maraging-Stähle sind für den Wandbereich des Volumenausgleichselementes geeignet.

Bei dieser Ausbildung des Volumenausgleichselementes kann es insbesondere vorgesehen sein, dass ein Band oder Blech aus martensitausgehärtetem Stahl an eine Innenwand des Düsenschafts oder der Einlasskammer derart angeschweißt ist, dass zwischen der Innenwand und dem Blech oder Band aus martensitausgehärtetem Stahl eine mit Gas gefüllte Tasche ausgebildet ist, die das Volumenausgleichselement darstellt. Bei einer solchen Bauform wirkt sich ausdehnendes Fluid beim Einfrieren auf den Wandbereich aus martensitausgehärtetem Stahl, welcher seinerseits auf das dahinter eingeschlossene Gas wirkt. Die gasgefüllte Tasche wird somit komprimiert.

Diese Ausführungsform hat den Vorteil, dass sich das Volumenausgleichselement gezielt dort anordnen lässt, wo typischerweise die Gefahr einer Beschädigung der Einspritzvorrichtung durch stehendes Fluid besonders groß ist.

Gemäß einer weiteren Ausführungsform weist das zumindest eine als Inlay ausgebildete Volumenausgleichselement und / oder das Volumenausgleichselement in der Ventilnadel Bereiche aus einem elastischen, porösen Kunststoff auf, wobei die Poren des Kunststoffs mit einem Gas gefüllt sind. Bei dieser Ausführungsform wird ebenfalls ein flexibel einsetzbares Volumenausgleichselement zur Verfügung gestellt, das gezielt dort angeordnet werden kann, wo Schäden aufgrund sich ausdehnenden Fluids zu erwarten wären. Zudem hat die Verwendung eines elastischen, porösen Kunststoffs den Vorteil, dass das Volumenausgleichselement verhältnismäßig leicht ist und nicht so einfach undicht werden kann, wodurch eine Komprimierbarkeit verloren ginge.

In einer Ausführungsform ist das zumindest eine Volumenausgleichselement als Inlay ausgebildet und im Inneren der Einspritzvorrichtung derart angeordnet, dass es im Wesentlichen vollständig von dem Fluid umgeben ist.

Dabei wird hier und im Folgenden unter einem Inlay ein separates Element verstanden, das bereits für sich das Volumenausgleichselement darstellt und in einer Kammer der Einspritzvorrichtung angeordnet wird. Das Inlay ist dann im Wesentlichen vollständig von dem Fluid umgeben, wenn es im weit überwiegenden Bereich seiner Oberfläche von Fluid umgeben ist. Kleine Oberflächenbereiche - beispielsweise von 25 % oder weniger, vorzugsweise von 10 % oder weniger, insbesondere von 5 % oder weniger - können beispielsweise für eine Aufhängung oder Befestigung des Inlays in der Kammer genutzt werden, so dass diese nicht mit dem Fluid in Berührung kommen.

Diese Ausführungsform hat den Vorteil, dass eine große Oberfläche des Volumenausgleichselementes für die Einwirkung von durch das Fluid ausgeübten Kräften zur Verfügung steht.

In einer alternativen Ausführungsform ist das zumindest eine Volumenausgleichselement als Verkleidung einer Wand des Düsenschafts und/oder der Einlasskammer ausgebildet. Dabei kann das Volumenausgleichselement beispielsweise als Wandverkleidung aus elastischem, porösen Kunststoff ausgebildet sein oder als gasgefüllte Tasche mit einem Wandbereich aus martensitausgehärtetem Stahl.

Diese Ausführungsform hat den Vorteil, dass die Befestigung des Volumenausgleichselementes innerhalb der Einspritzvorrichtung verhältnismäßig einfach ist.

Das als Inlay ausgebildete Volumenausgleichselement kann insbesondere in einer Einlasskammer (englisch "Inlet tube") der Einspritzvorrichtung angeordnet sein. Alternativ oder zusätzlich kann sie auch im Düsenschaft der Einspritzvorrichtung angeordnet sein.

In diesen Bereichen steht einerseits der Bauraum zur Verfügung, andererseits sind dies auch die Bereiche, in denen das Fluid steht und im Falle eines Einfrierens Schäden zu erwarten sind.

Gemäß einer Ausführungsform ist die Ventilnadel aus martensitausgehärtetem Stahl ausgebildet und weist in ihrem Inneren einen mit Gas gefüllten Hohlraum auf. Bei dieser Ausführungsform stellt die Ventilnadel selbst das Volumenausgleichselement oder eines der Volumenausgleichselemente dar. Durch ihre verformbaren Wände und den mit Gas gefüllten Hohlraum ist sie komprimierbar.

Diese Ausführungsform hat den Vorteil, dass ein verhältnismäßig großes Volumenausgleichselement zur Verfügung gestellt werden kann, ohne dass zusätzlicher Bauraum innerhalb der Einspritzvorrichtung geschaffen werden muss.

Die Einspritzvorrichtung ist insbesondere als Einspritzvorrichtung für eine Harnstofflösung in einer Abgasnachbehandlung ausgebildet, da aufgrund des Gefrierpunktes von Harnstofflösung von -7°C derartige Einspritzvorrichtungen entsprechend gegen eine Zerstörung durch die Volumenausdehnung des Harnstoffs geschützt werden müssen.

Gemäß einem weiteren Aspekt der Erfindung ist es auch möglich, Teile der Einspritzvorrichtung aus martensitausgehärtetem Stahl auszubilden, um eine besondere Widerstandsfähigkeit zu erreichen. Beispielsweise kann eine Düsenplatte, welche insbesondere den Ventilsitz und/oder mindestens eine Düse der Einspritzvorrichtung aufweist, aus martensitausgehärtetem Stahl ausgebildet sein. Alternativ oder zusätzlich kann der Ventilkörper - insbesondere zumindest im Bereich des Düsenschafts - aus martensitausgehärtetem Stahl ausgebildet sein. Der Düsenschaft ist bei dieser und anderen Ausgestaltungen vorzugsweise stromaufwärts von der Düsenplatte angeordnet und kann insbesondere an diese angrenzen. Düsenschaft und Düsenplatte können einstückig - d.h. insbesondere aus ein und demselben Werkstück hergestellt - oder separat gefertigt sein. Dies kann mit den beschriebenen Volumenausgleichselementen kombiniert werden oder in Alleinstellung angewandt werden, um eine bessere Festigkeit der Einspritzvorrichtung zu erhalten.

Weitere Vorteile sowie vorteilhafte Ausgestaltungen und Weiterbildungen der Einspritzvorrichtung ergeben sich aus den folgenden, anhand von Figuren näher beschriebenen Ausführungsbeispielen.
- Figur 1: zeigt schematisch eine Schnittdarstellung einer Einspritzvorrichtung gemäß einem nicht zu Erfindung gehörenden Ausführungsbeispiel.
- Figur 2: zeigt schematisch ein Detail der Einspritzvorrichtung gemäß Figur 1,
- Figur 3: zeigt schematisch ein weiteres Detail der Einspritzvorrichtung gemäß Figur 1,
- Figur 4: zeigt Details zu Ausführungsformen der Volumenausgleichselemente der Einspritzvorrichtung gemäß Figur 1,
- Figur 5: zeigt schematisch eine Schnittdarstellung einer Einspritzvorrichtung gemäß einem Ausführungsbeispiel der Erfindung und
- Figur 6: zeigt schematisch eine Schnittdarstellung einer Einspritzvorrichtung gemäß einem weiteren Ausführungsbeispiel der Erfindung.

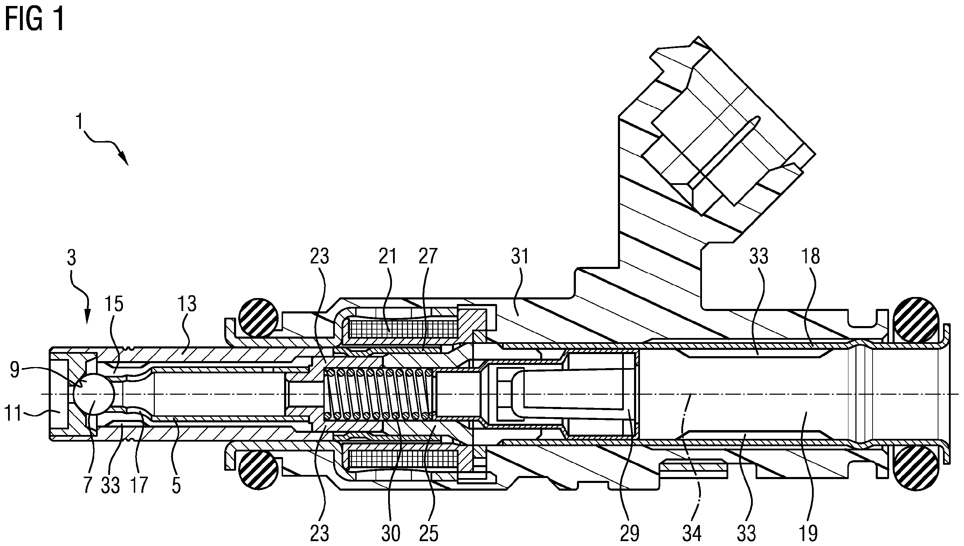

Figur 1 zeigt eine Einspritzvorrichtung 1 gemäß einem nicht zur Erfindung gehörenden Ausführungsbeispiel, die als Einspritzvorrichtung für eine Harnstofflösung in einem System zur Abgasnachbehandlung eines Kraftfahrzeuges ausgebildet ist.

Die Einspritzvorrichtung 1 weist ein Ventil 3 mit einer Ventilnadel 5, einer als Kugel ausgebildeten Spitze 7 und einem Ventilsitz 9 auf. Im geschlossenen Zustand ist die Spitze 7 durch die Kraft einer Feder 30 auf den Ventilsitz 9 gedrückt und verschließt somit die Düse 11. Ventilsitz 9 und Düse 11 sind in einer Düsenplatte der als Einspritzventil ausgebildeten Einspritzvorrichtung 1 enthalten. Ein Ventilgehäuse 13 umgibt das Ventil 3 sowie den Düsenschaft 15, der als Hohlraum innerhalb des Ventilgehäuses 13 ausgebildet ist und im Betrieb mit Harnstofflösung gefüllt ist. Ein Durchlass 17 in der hohl ausgebildeten Ventilnadel 5 erlaubt den Übertritt von Harnstofflösung in den Düsenschaft 15.

Auf der dem Ventil abgewandten Seite des Düsenschafts 15 schließt sich an diesen eine Einlasskammer 19 an, die durch das Einlassrohr 18 gebildet ist und die mit dem Düsenschaft 15 in Fließverbindung steht. In der Einlasskammer 19 ist ein Filter 29 für das Fluid angeordnet, über dessen Positionierung die Vorspannung der Feder 30 einstellbar ist.

Im Betrieb sind die Einlasskammer 19 und der Düsenschaft 15 mit dem einzuspritzenden Fluid - im vorliegenden Ausführungsbeispiel Harnstofflösung - gefüllt. Um ein Einspritzen von Harnstofflösung durch die Düse 11 zu ermöglichen, weist die Einspritzvorrichtung 1 eine elektromagnetische Betätigungsvorrichtung auf.

Die elektromagnetische Betätigungsvorrichtung hat eine Spule 21, einen Anker 23, ein Polstück 25 sowie eine nichtmagnetische Hülse 27, die auf ein Ende des Polstücks 25 aufgepresst ist. Der Anker 23 ist in Längsrichtung der Einspritzvorrichtung 1 gegenüber dem Ventilkörper 13 verschiebbar und nimmt die Ventilnadel 5 mit, die bei einer Verschiebung in einer Richtung weg vom Ventilsitz 9 die Düse 11 freigibt und den Austritt von Harnstofflösung durch die Düse 11 ermöglicht.

Die Einspritzvorrichtung 1 weist mit Gas gefüllte, komprimierbare Volumenausgleichselemente 33 auf, die die Kompensation einer Volumenzunahme der Harnstofflösung im Falle eines Einfrierens ermöglichen und somit eine Schädigung der Einspritzvorrichtung 1 verhindern. In der gezeigten Ausführungsform ist ein erstes Volumenausgleichselement 33 im Bereich des Düsenschafts 15 angeordnet, ein zweites Volumenausgleichselement 33 ist im Bereich der Einlasskammer angeordnet. Beide Volumenausgleichselemente 33 sind in der gezeigten Ausführungsform als Wandverkleidungen ausgebildet.

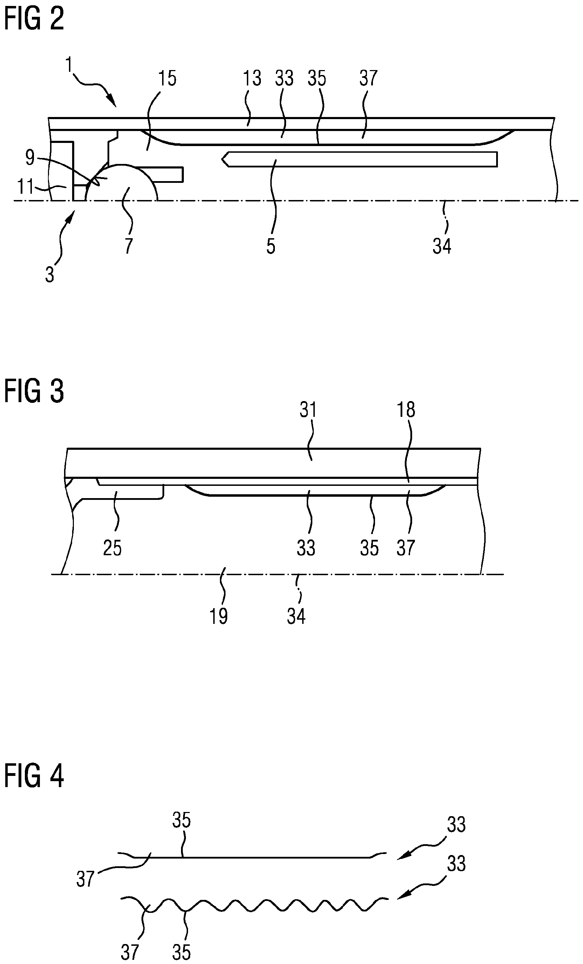

Die Volumenausgleichselemente 33 gemäß dieser Ausführungsform sind in den Figuren 2 und 3 im Detail dargestellt. Die Figuren 2, 3, 5 und 6 zeigen der Einfachheit halber lediglich die Hälfte der Einspritzvorrichtung 1 oberhalb der Symmetrieachse 34.

Die Volumenausgleichselemente 33 weisen jeweils eine Wand 35 auf, die durch ein dünnes Blech oder Band aus einem martensitausgehärteten Stahl gebildet ist. Die Wand 35 ist derart mit dem Ventilgehäuse 13 bzw. dem Einlassrohr 18 verschweißt, dass sich zwischen der Wand 35 und dem Ventilgehäuse 13 bzw. dem Einlassrohr 18 ein gasgefüllter Hohlraum 37 ausbildet. Der gasgefüllte Hohlraum ist insbesondere mit Luft gefüllt. Die den fluid-gefüllten Hohlraum definierende Oberfläche des Düsenschafts 15, die mit dem Fluid in Kontakt steht, wird somit von einer Oberfläche des mit dem Ventilgehäuse 13 verschweißten Volumenausgleichselements 33, sowie ggf. von Bereichen einer inneren Umfangsfläche des Ventilkörpers 13 gebildet, die von dem Volumenausgleichselement 33 unbedeckt sind.

Im Falle eines Einfrierens der Harnstofflösung und einer damit verbundenen Volumenzunahme übt die Harnstofflösung eine Kraft auf die Wand 35 der Volumenausgleichselemente 33 aus. Aufgrund dieser Kraft wird die Luft in dem gasgefüllten Hohlraum 37 komprimiert, die Wand 35 erfährt dabei eine Verformung. Auf andere Bauteile der Einspritzvorrichtung 1, beispielsweise auf das Ventilgehäuse 13 oder das Einlassrohr 18 wird keine zusätzliche Kraft ausgeübt bzw. eine auf diese ausgeübte Kraft ist stark vermindert, dadurch, dass die Volumenausgleichselemente 33 den überwiegenden Teil der Volumenzunahme oder sogar die gesamte Volumenzunahme der Harnstofflösung kompensieren. Die Belastung der Einspritzvorrichtung 1 aufgrund einfrierenden Fluids ist somit stark reduziert und ihre Lebensdauer somit erhöht.

Figur 4 zeigt verschiedene Ausführungsformen der Volumenausgleichselemente 33 gemäß den Figuren 1 bis 3. Während die Wand 35 in der oberen Darstellung gemäß Figur 4 weitgehend parallel zur Innenwand des Ventilgehäuses 13 bzw. des Einlassrohrs 18 verläuft, hat die Wand 35 in der unteren Darstellung gemäß Figur 4 im Schnitt einen wellenförmigen Verlauf. Dadurch ist ihre Oberfläche vergrößert und ihre Verformbarkeit erhöht.

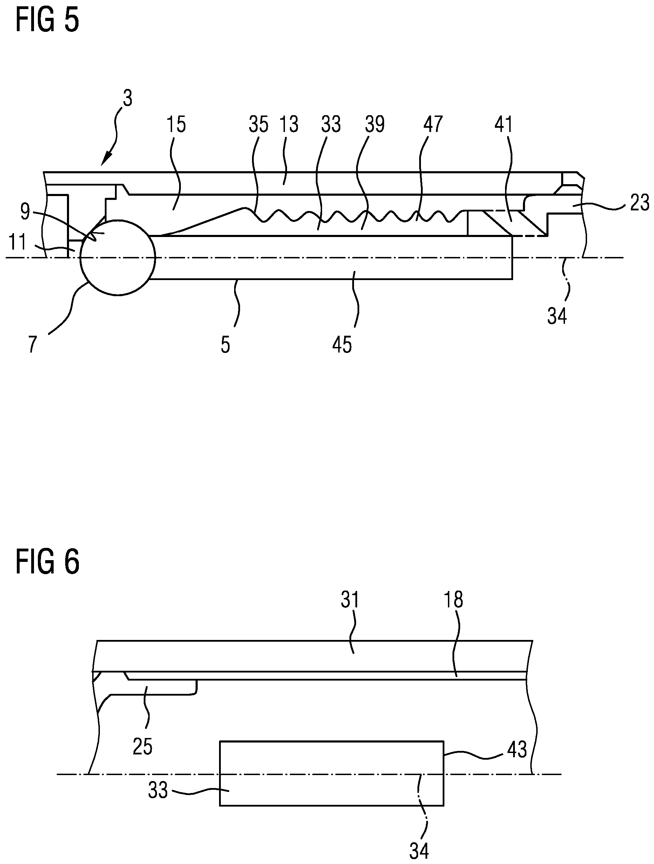

Figur 5 zeigt eine Einspritzvorrichtung 1 für eine flüssige Harnstofflösung gemäß einem Ausführungsbeispiel der Erfindung. Diese unterscheidet sich von der in den Figuren 1 bis 3 gezeigten dadurch, dass das Volumenausgleichselement 33 durch die Ventilnadel 5 selbst gebildet ist. Bei dieser Ausführungsform ist die Ventilnadel 5 abgeschlossen und innen hohl ausgebildet. Da sie geschlossen ist, ist sie im Betrieb nicht mit Harnstofflösung gefüllt. Vielmehr weist sie einen festen Grundkörper 45 auf, der beispielsweise aus martensitausgehärtetem Stahl bestehen kann, und einen darum angeordneten und mit dem Grundkörper verbundenen komprimierbaren Körper 47, der das Volumenausgleichselement 33 bildet. Der komprimierbare Körper 47 kann, wie bereits im Zusammenhang mit anderen Ausführungsformen beschrieben, aus porösem Kunststoff ausgebildet sein oder eine Wand 35 mit einem gasgefüllten Hohlraum 39 dahinter aufweisen.

In der gezeigten Ausführungsform weist der martensitausgehärtete Stahl eine Zusammensetzung auf von 8 Gew.% Nickel, 1 Gew.% Molybdän, 13 Gew.% Chrom, maximal 0,5 Gew.% Beryllium, Rest Eisen. Dieses Material weist eine sehr gute Verformbarkeit gute Federeigenschaften sowie eine gute Korrosionsbeständigkeit auf. Wie sich herausgestellt hat, ist es aufgrund dieser Eigenschaften zur Ausbildung von Volumenausgleichselementen 33 sehr gut geeignet.

Da die Ventilnadel 5 in dieser Ausführungsform abgeschlossen und nicht mit Harnstofflösung gefüllt ist, ist oberhalb der Ventilnadel 5 im Bereich des Ankers 23 ein Durchlass 41 für die Harnstofflösung aus der Einlasskammer 19 in den Düsenschaft 15 vorgesehen.

Figur 6 zeigt eine Einspritzvorrichtung 1 gemäß einer weiteren Ausführungsform der Erfindung. Diese unterscheidet sich von den anderen Ausführungsformen dadurch, dass das Volumenausgleichselement 33 durch ein innerhalb der Einlasskammer 19 angeordnetes Inlay 43 ausgebildet ist. Das Inlay 43 ist als komprimierbarer Körper ausgebildet, beispielsweise als Kunststoffkörper aus einem elastischen Kunststoff mit gasgefüllten Poren darin oder als Körper mit Metallwandung, der einen gasgefüllten Hohlraum umgibt. Als Material für die Metallwandung kann beispielsweise Stahl eingesetzt werden. Geeignet sind neben Maraging-Stählen auch Edelstähle.

Das Inlay 43 ist im Wesentlichen von Harnstofflösung umgeben, da es zentral in der Einlasskammer 19 angeordnet ist. In der Ausführungsform gemäß Figur 6 ist es entlang der Symmetrieachse 34 der Einspritzvorrichtung 1 angeordnet. In dieser Position, in der es dem Fluid eine große Oberfläche bietet, ist das Inlay 43 in der Einlasskammer 19 fixiert. Die Befestigung, die in Figur 6 nicht gezeigt ist, kann beispielswiese durch Clipsen - d.h. insbesondere durch Befestigung mittels einer Federklammer - erfolgen.

Im Falle eines Einfrierens der Harnstofflösung wirken von allen Seiten Kräfte auf das Inlay 43 und komprimieren es, um die Volumenzunahme der Harnstofflösung auszugleichen, so dass eine Beschädigung der Einspritzvorrichtung 1 verhindert wird.

## Patentansprüche

1. Einspritzvorrichtung (1) zur Zumessung eines Fluids, die folgendes aufweist:
- ein Ventil (3) mit einer Ventilnadel (5) und einem Ventilsitz (9);
- einen die Ventilnadel (5) umgebenden Düsenschaft (15), der ein Volumen des Fluids aufnimmt;
- eine sich auf der dem Ventil (3) abgewandten Seite des Düsenschafts (15) an diesen anschließende und mit diesem in Fließverbindung stehende Einlasskammer (19);
wobei die Einspritzvorrichtung (1) zumindest ein mit einem Gas gefülltes, komprimierbares Volumenausgleichselement (33) aufweist, das innerhalb der Einspritzvorrichtung (1) in Kontakt mit dem Fluid steht und einen Wandbereich (35) aus einem martensitausgehärteten Stahl aufweist,
wobei
- das zumindest eine Volumenausgleichselement (33) als Inlay (43) ausgebildet und im Innern der Einspritzvorrichtung (1) zentral in der Einlasskammer (19) derart angeordnet ist, dass es im Wesentlichen vollständig von dem Fluid umgeben ist und/oder
- die Ventilnadel (5) einen festen Grundkörper (45) aus martensitausgehärtetem Stahl und einen darum angeordneten und mit dem Grundköper (45) verbundenen komprimierbaren Körper (47) aufweist, so dass das Volumenausgleichselement (33) gebildet ist.

2. Einspritzvorrichtung (1) nach dem vorhergehenden Anspruch,
wobei das zumindest eine als Inlay (43) ausgebildete Volumenausgleichselement (33) und / oder das Volumenausgleichselement in der Ventilnadel (5) Bereiche aus einem elastischen, porösen Kunststoff aufweist, wobei die Poren des Kunststoffs mit einem Gas gefüllt sind.

3. Einspritzvorrichtung (1) nach einem der vorhergehenden Ansprüche, die als Einspritzvorrichtung (1) für eine Harnstofflösung in einer Abgasnachbehandlung ausgebildet ist.

4. Kraftfahrzeug mit einer Einspritzvorrichtung (1) nach Anspruch 3.

## Claims

1. Injection device (1) for metering a fluid, having the following:
- a valve (3) with a valve needle (5) and with a valve seat (9);
- a nozzle shaft (15) which surrounds the valve needle (5) and which receives a volume of the fluid;
- an inlet chamber (19) which adjoins, on that side of the nozzle shaft (15) facing away from the valve (3), said nozzle shaft and which is connected in terms of flow thereto;
wherein the injection device (1) has at least one compressible volume compensation element (33) which is filled with a gas and which is, within the injection device (1), in contact with the fluid and which has a wall region (35) composed of a martensitically hardened steel,
wherein
- the at least one volume compensation element (33) is in the form of an inlay (43) and is arranged in the interior of the injection device (1) centrally in the inlet chamber (19) in such a way that it is surrounded substantially completely by the fluid, and/or
- the valve needle (5) has a firm main body (45) composed of martensitically hardened steel and has a compressible body (47) arranged therearound that is connected to the main body (47) such that the volume compensation element (33) is formed.

2. Injection device (1) according to the preceding claim,
wherein the at least one volume compensation element (33) in the form of an inlay (43) and/or the volume compensation element in the valve needle (5) have/has regions composed of an elastic, porous plastic, wherein the pores of the plastic are filled with a gas.

3. Injection device (1) according to either of the preceding claims,
which is in the form of an injection device (1) for a urea solution in an exhaust-gas aftertreatment system.

4. Motor vehicle having an injection device (1) according to Claim 3.

## Revendications

1. Dispositif d'injection (1) destiné à doser un fluide, lequel dispositif comporte les éléments suivants :
- une soupape (3) munie d'un pointeau de soupape (5) et d'un siège de soupape (9) ;
- un arbre de buse (15) entourant le pointeau de soupape (5) et recevant un volume de fluide ;
- une chambre d'admission (19) qui est attenante à l'arbre de buse (15), du côté de celui-ci qui est à l'opposé de la soupape (3), et qui est en communication fluidique avec celui-ci ;
le dispositif d'injection (1) comportant au moins un élément de compensation de volume compressible qui est rempli d'un gaz (33) et qui est en contact avec le fluide à l'intérieur du dispositif d'injection (1) et qui comporte une zone de paroi (35) en acier martensitique,
- l'au moins un élément de compensation de volume (33) étant conçu sous la forme d'un insert (43) et étant disposé à l'intérieur du dispositif d'injection (1) au centre de la chambre d'admission (19) de manière à être entouré sensiblement complètement par le fluide et/ou
- le pointeau de soupape (5) comportant un corps de base solide (45) en acier martensitique et un corps compressible (47) disposé autour de celui-ci et relié au corps de base (45), de manière à former l'élément de compensation de volume (33).

2. Dispositif d'injection (1) selon la revendication précédente,
l'au moins un élément de compensation de volume (33) conçu comme un insert (43) et/ou l'élément de compensation de volume dans le pointeau de soupape (5) comportant des zones en matière synthétique poreuse élastique, les pores de la matière synthétique étant remplis d'un gaz.

3. Dispositif d'injection (1) selon l'une des revendications précédentes,
lequel est conçu comme un dispositif d'injection (1) destiné à une solution d'urée dans un post-traitement de gaz d'échappement.

4. Véhicule automobile comportant un dispositif d'injection (1) selon la revendication 3.
